# EUROPÄISCHE PATENTSCHRIFT

(11) **EP 4 269 000 B1**
(45) Veröffentlichungstag und Bekanntmachung des Hinweises auf die Patenterteilung: **03.07.2024**
(21) Anmeldenummer: 22176511.8
(22) Anmeldetag: 31.05.2022
(51) Int. Cl.: B22F 10/10, B33Y 10/00, B33Y 40/20, B33Y 80/00, H01F 1/00, B22F 5/10, B22F 7/06, B22F 10/18, H01F 3/08, B22F 3/10, B22F 10/64, B22F 12/53, B22F 12/55, H01F 3/02, H01F 41/02, H02K 15/02, H01F 3/10

(54) **ADDITIV HERGESTELLTES MAGNETBLECH, BLECHPAKET UND ELEKTRISCHE MASCHINE**
MAGNETIC SHEET CREATED THROUGH ADDITIVE MANUFACTURE, LAMINATED CORE AND ELECTRIC MACHINE
TÔLE MAGNÉTIQUE FABRIQUÉE DE MANIÈRE ADDITIVE, PAQUET DE TÔLE ET MACHINE ÉLECTRIQUE

(30) Priorität: 27.04.2022 EP 22170312
(43) Veröffentlichungstag der Anmeldung: 01.11.2023
(73) Patentinhaber: Siemens Aktiengesellschaft, 80333 München (DE)
(72) Erfinder: Schuh, Carsten, 85598 Baldham (DE); Vollmer, Rolf, 36129 Gersfeld (DE)
(74) Vertreter: Siemens Patent Attorneys

(56) Entgegenhaltungen:
- EP-A1- 3 809 560
- DE-A1-102020 208 160
- US-A1- 2019 344 494
- US-A1- 2021 114 097

## Beschreibung

Die Erfindung betrifft ein additiv hergestelltes Magnetblech nach dem Patentanspruch 1, ein Blechpaket nach Patentanspruch 14 sowie eine elektrische Maschine nach Patentanspruch 15.

Ein neues Verfahren zur Herstellung von Magnetblechen für elektrische Maschinen stellt der Sieb- oder der Schablonendruck dar. Hierbei wird mittels einer Schablone, bei der die offenen Bereiche auch mit einem Sieb versehen sein können, eine Druckpaste auf ein Substrat gedruckt. Man spricht hierbei von Schablonendruck oder Siebdruck, wobei der Schablonendruck ein Oberbegriff des Siebdrucks ist. Die Druckpaste enthält neben Lösungsmitteln und / oder Bindemitteln Metallpulver, die funktional im späteren Bauteil wirken. Durch die Siebdrucktechnik wird ein Grünkörper hergestellt, der nach einer weiteren thermischen Behandlung zunächst in der Regel entbindert wird und anschließend bei einer höheren Temperatur einem Sinterprozess zugeführt wird, wobei die metallischen Pulverkörner so miteinander versintern, dass ein strukturiertes Blech, das Magnetblech, entsteht.

Zur Erzielung einer höheren mechanischen Festigkeit solcher Bleche, insbesondere bei hohen Drehzahlen von Rotoren elektrischer Maschinen, gewinnt nun die Herstellbarkeit von Zweikomponenten-Magnetblechen immer mehr an Bedeutung. Ein Beispiel hierfür ist in der EP 3723249 A1 beschrieben. Ferner seien hierbei noch die EP 3 629 453 A1, EP 3 932 591 A1 und die EP 3 725 435 A1 zu nennen. Ein grundsätzliches Problem bei derartigen Zweikomponenten-Magnetblechen, die im Schablonendruckverfahren hergestellt werden, besteht darin, dass die unterschiedlichen Materialien, wenn sie einerseits gute magnetische Eigenschaften haben und auf der anderen Seite eine hohe Festigkeit aufweisen, in der Regel unterschiedliche thermische Ausdehnungskoeffizienten aufweisen. So hat beispielsweise ein hochfester Stahl, der zur mechanischen Festigkeit des Magnetblechs eine Teilkomponente darstellt, einen Ausdehnungskoeffizienten von 16 × 10⁻⁶ K⁻¹. Ein weiterer weichmagnetischer Werkstoff hat dabei in einer Temperaturspanne zwischen 0 und 100° C einen thermischen Ausdehnungskoeffizienten, der zwischen 10 - 12 × 10⁻⁶ K⁻¹ liegt. Bei der gemeinsamen Sinterung derartig unterschiedlicher Materialkomponenten bzw. Materialpaarungen in einem Grünkörper zu einem Magnetblech kommt es insbesondere bei der Abkühlung von den Sintertemperaturen zur Raumtemperatur aufgrund dieser unterschiedlichen thermischen Ausdehnungskoeffizienten zur Ausbildung von hohen mechanischen Spannungen in den Verbindungs- bzw. Nahtbereichen zwischen diesen Materialkomponenten. Dies kann zu Verwölbungen oder zu Rissen oder insgesamt zu mechanischen Spannungen im Magnetblech führen, die die mechanischen oder magnetischen Eigenschaften deutlich verschlechtern können.

Die Aufgabe der Erfindung besteht darin, ein Magnetblech bereitzustellen, sowie daraus ein Blechpaket und eine elektrische Maschine zu generieren, bei denen das Magnetblech gegenüber dem Stand der Technik bei Anwendung von mindestens zwei Materialkomponenten innerhalb des Magnetblechs eine höhere Festigkeit sowie weniger intrinsische Spannungen aufweist.

Die Lösung der Aufgabe besteht in einem Magnetblech mit den Merkmalen des Patentanspruchs 1, in einem Blechpaket mit den Merkmalen des Patentanspruchs 14 sowie in einer elektrischen Maschine mit den Merkmalen des Patentanspruchs 15.

Patentanspruch 1 beschreibt ein additiv hergestelltes Magnetblech für ein Blechpaket einer elektrischen Maschine, wobei mindestens zwei in planarer Erstreckung voneinander getrennte Materialkomponenten vorliegen, es zeichnet sich dadurch aus, dass
- eine erste Materialkomponente in einem radial inneren Bereich des Magnetblechs angeordnet ist und eine zweite Materialkomponente in einem radial äußeren Bereich angeordnet ist und
- ein Übergangsbereich zwischen dem radial inneren Bereich und dem radial äußeren Bereich vorgesehen ist, in dem sowohl die erste Materialkomponente und die zweite Materialkomponente in diskreten Teilbereichen vorliegen, wobei
- die diskreten Teilbereiche in radialer Richtung in der Art in Reihe angeordnet sind, dass eine einem Radius folgende Linie mindestens zwei diskrete Teilbereiche schneidet.

Das beschriebene Magnetblech weist den Vorteil auf, dass durch ein lokales Werkstoffdesign einerseits Werkstoffbereiche mit sehr guten magnetischen Eigenschaften lokal dargestellt werden können und andererseits Werkstoffbereiche mit sehr hohen mechanischen Festigkeiten dargestellt werden können. In dem oder den Übergangsbereich/en liegen beide Materialkomponenten in Form von diskreten Teilbereichen vor. Dabei sind die diskreten Teilbereiche so entlang einer dem Radius folgenden Linie angeordnet, dass diese Linie mindestens zwei Teilbereiche schneidet. Das bedeutet, dass sich die Teilbereiche in radialer Richtung wiederholen und in ihrer Wirkung verstärken und die Anbindung der beiden Materialkomponenten aneinander verbessern. Der Übergangsbereich mit den jeweils beschriebenen diskreten Teilbereichen der einzelnen Materialkomponenten ist besonders gut dazu geeignet, die unterschiedlichen thermischen Ausdehnungskoeffizienten aneinander anzupassen. Bei den beschriebenen, in ihrer flächigen Ausbreitung kleineren, diskreten Teilbereichen ist die absolute Ausdehnung beim Erwärmen im Betrieb oder auch bei der Sinterschwindung für sich genommen kleiner als bei größeren Bereichen, nämlich den radial inneren und radial äußeren Bereichen. Durch Berechnung beispielsweise mit finiten Elementen kann eine geeignete Struktur der diskreten Teilbereiche im Übergangsbereich ermittelt werden und somit die Spannungen innerhalb des Magnetbleches auch noch durch Anwendung der beschriebenen finiten Elemente-Methode minimiert werden. Zudem wirkt eine längere Grenzlinie, die abwechselnd in unterschiedliche Richtungen erfolgt, wie dies durch die diskreten Teilbereiche hervorgerufen wird, mechanischen Spannungen aufgrund von unterschiedlichen thermischen Ausdehnungskoeffizienten entgegen.

Unter diskreten Teilbereichen wird dabei verstanden, dass es sich nicht um eine Mischung der einzelnen Materialkomponenten in dem Übergangsbereich handelt, sondern dass in dem Übergangsbereich abschnittsweise Bereiche mit der ersten Materialkomponente und der zweiten Materialkomponente getrennt voneinander, also diskret, vorliegen. Die diskreten Bereiche können also durch die erste Materialkomponente und durch die zweite Materialkomponente ausgebildet sein. Diese können im Übergangsbereich nebeneinander vorliegen. Dabei kann ein diskreter Bereich mit dem jeweiligen mit ihm korrespondierenden Materialbereich, also dem inneren oder dem äußeren Bereich, in direkter Verbindung stehen. Das heißt, der diskrete Bereich mit einer Materialkomponente wächst aus seinem korrespondierenden Bereich heraus in die andere Materialkomponente hinein, er liegt gegenüber dieser jedoch diskret vor.

Dabei können die einzelnen Materialkomponenten in dem Übergangsbereich sowohl zusammenhängend an dem inneren oder äußeren Bereich angeordnet sein oder als Inseln innerhalb der jeweiligen anderen Materialkomponente vorliegen. Der Übergangsbereich mit den jeweils beschriebenen diskreten Teilbereichen der einzelnen Materialkomponenten ist besonders gut dazu geeignet, die unterschiedlichen thermischen Ausdehnungskoeffizienten aneinander anzupassen. Bei den beschriebenen kleineren diskreten Teilbereichen ist die absolute Ausdehnung beim Erwärmen im Betrieb oder auch bei der Sinterschwindung für sich genommen kleiner als bei größeren Bereichen. Durch Berechnung beispielsweise mit finiten Elementen kann eine geeignete Struktur der diskreten Teilbereiche im Übergangsbereich ermittelt werden und somit die Spannungen innerhalb des Magnetbleches auch noch durch Anwendung der beschriebenen finiten Elemente-Methode minimiert werden.

Insbesondere bei der Darstellung von inselförmigen diskreten Teilbereichen in den Übergangs-Druckbereichen kann es verfahrenstechnisch aufwendig sein, dass eine Materialkomponente in eine bereits gedruckte Materialkomponente eingedruckt wird. In diesem Fall kann es zweckmäßig sein, ein druckfreies additives Fertigungsverfahren, insbesondere ein Sprühverfahren, für die Darstellung der zweiten Druckmaterial-Vorkomponente, insbesondere in Inselbereichen, zu verwenden.

In einer bevorzugten Ausgestaltung ist das Magnetblech in der Art ausgestaltet, dass in einem Grenzbereich zwischen der ersten Materialkomponente und der zweiten Materialkomponente im Übergangsbereich eine Diffusionszone vorliegt, die sich mindestens 50 µm in die jeweilig andere Materialkomponente hinein erstreckt. Diese gezielt eingeführte Diffusionszone ist breiter als Diffusionszonen, die üblicherweise bei einem Ko-Sinterprozess von zwei verschiedenen Materialkomponenten vorliegen. Durch die breitere Diffusionszone wird eine weitere Angleichung der unterschiedlichen Ausdehnungskoeffizienten bewirkt.

Es hat sich als zweckmäßig herausgestellt, dass ein Flächenanteil der ersten Materialkomponente im Übergangsbereich zwischen 5 % und 40 % beträgt. Durch das Verhältnis zwischen erster Materialkomponente und zweiter Materialkomponente im Übergangsbereich lassen sich die thermisch bedingten Spannungen gut reduzieren.

Je nach Ausdehnung des Magnetblechs und somit je nach Durchmesser eines Blechpakets und Rotors einer elektrischen Maschine ist es zweckmäßig, dass der Übergangsbereich eine radiale Erstreckung aufweist, die zwischen 1 mm und 30 mm liegt. Bevorzugt weist der Übergangsbereich eine radiale Erstreckung auf, die entlang eines Radius des Magnetblechs zwischen 3 mm und 10 mm liegt. Die diskreten Bereiche weisen dabei eine maximale Erstreckung auf, die zwischen 0,5 mm und 10 mm liegen. Unter maximaler Erstreckung wird dabei die maximale gerade Linie verstanden, die man in dem diskreten Bereich ziehen kann, ohne ihn zu verlassen.

Ferner ist es vorteilhaft, wenn mehrere diskrete Teilbereiche mindestens einer Materialkomponente sich derart kreuzen, dass dadurch mindestens ein diskreter Teilbereich der jeweils anderen Materialkomponente eingeschlossen wird. Eine derartige, zaunartige Struktur ist besonders gut geeignet, Verzahnungen zwischen den einzelnen Materialkomponenten herzustellen und dabei die Auswirkung der unterschiedlichen Ausdehnungskoeffizienten zu minimieren.

In einer weiteren Ausgestaltungsform der Erfindung ist die zweite Materialkomponente eine Eisenlegierung, die mindestens 95 Gew.-%, insbesondere mindestens 97 Gew.-% und ganz besonders bevorzugt mindestens 99 Gew.-% Eisen aufweist. Im Idealfall handelt es sich dabei um Reineisen, da Reineisen die beste ferritische Gefügestruktur oder martensitische Gefügestruktur aufweist und dabei sehr gute weichmagnetische Eigenschaften aufweist, die für die jeweilige Ummagnetisierung bei einer elektrischen Maschine vorteilhaft sind.

Die erste Materialkomponente im radial inneren Bereich des Magnetbleches sollte dabei bevorzugt so ausgestaltet sein, dass sie eine möglichst hohe Festigkeit aufweist und der mechanischen Belastung, die auf das Magnetblech wirkt, standhält. Hierfür ist insbesondere eine Chrom-Nickel-Legierung als Ausgangsmaterial für die erste Materialkomponente zweckmäßig. Diese Chrom-Nickel-Legierung weist dabei bevorzugt einen Chromanteil auf, der zwischen 22 Gew.% und 28 Gew.%, insbesondere zwischen 24 Gew.% und 26 Gew-% beträgt.

Der Nickelanteil liegt dabei in einer zweckmäßigen Ausgestaltungsform der Erfindung zwischen 4 Gew.% und 10 Gew.-%, insbesondere zwischen 6 Gew.% und 8 Gew.%, wobei die Eckwerte jeweils in dem angegebenen Bereich mit einbezogen sind.

Weitere Ausgestaltungsformen der Erfindung und weitere Merkmale der Erfindung ergeben sich aus den folgenden Figuren. Dabei handelt es sich um rein schematische Darstellungsformen, die keine Einschränkung des Schutzbereichs darstellen.

Dabei zeigen:
Figur 1, eine Explosionsdarstellung einer elektrischen Maschine in Form eines Elektromotors
Figur 2, ein Blechpaket für einen Rotor,
Figur 3, eine Draufsicht auf ein Magnetblech mit unterschiedlichen Materialbereichen,
Figur 4, ein vergrößerter Ausschnitt aus Figur 3 im Bereich eines Übergangsbereiches zwischen zwei Materialkomponenten,
Figur 5, eine vergrößerte Darstellung des Übergangsbereiches in Figur 4,
Figur 6 - 10, unterschiedliche Ausgestaltungsformen diskreter Bereiche im Übergangsbereich,
Figur 11, eine vergrößerte Darstellung des Ausschnitts XII in den Figuren 6, 7, 9, in dem ein Grenzbereich mit einer Diffusionszone dargestellt ist.

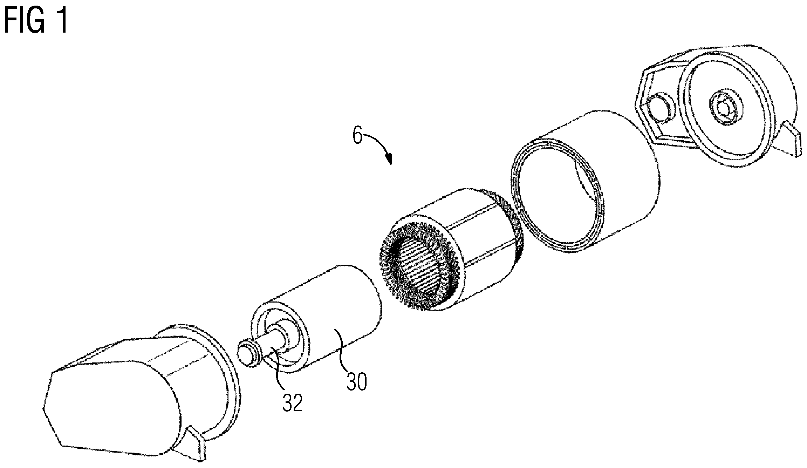

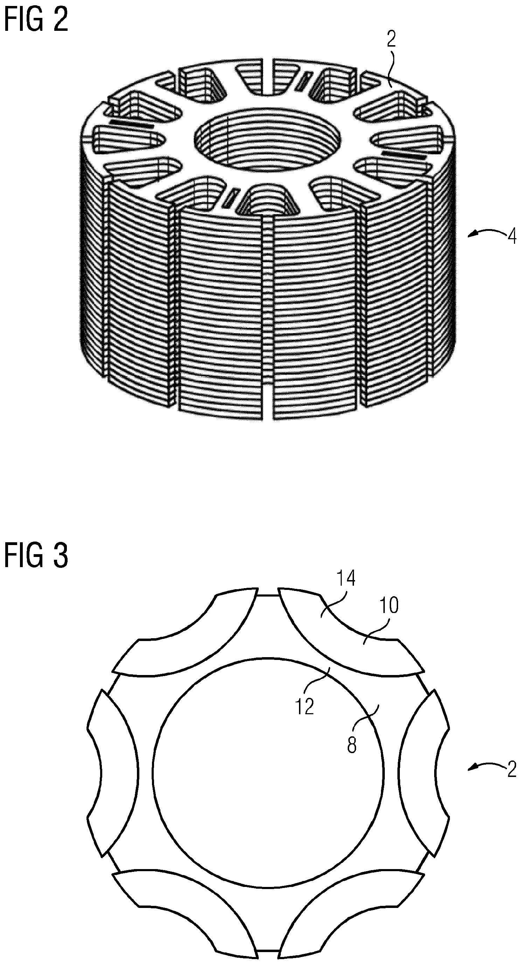

In Figur 1 ist eine Explosionsdarstellung einer elektrischen Maschine 6, hier in Form eines Elektromotors, beispielsweise für ein Elektrofahrzeug, dargestellt. Auf die einzelnen Komponenten der elektrischen Maschine 6 soll an dieser Stelle nicht weiter eingegangen werden. Bezeichnet wird jedoch ein Rotor 30, der auf einer Welle 32 montiert ist. Der Rotor 30 umfasst dabei ein Blechpaket 4, das in Figur 2 detaillierter dargestellt ist, wobei das Blechpaket 4 aus einzelnen Magnetblechen 2 gestapelt zusammengesetzt ist. Bei der Einbaulage in den Rotor 30 ist das Blechpaket 4 durch hier nicht dargestellte Wicklungen umgeben.

In Figur 3 ist eine Draufsicht auf ein Magnetblech 2 dargestellt, das zwei Bereiche aufweist, einen radialen inneren Bereich 12 und einen radial äußeren Bereich 14. Dabei umfasst der radial innere Bereich 12 eine erste Materialkomponente 8 und der radial äußere Bereich 14 umfasst eine zweite Materialkomponente 10.

Dabei ist die erste Materialkomponente 8 so ausgestaltet, dass sie eine hohe tragende Festigkeit für das Magnetblech 2 darstellt. Hierfür sind beispielsweise hoch legierte Stähle auf Chrom-Nickel-Basis vorgesehen. Bei der ersten Materialkomponente 8 handelt es sich bevorzugt, aber nicht notwendigerweise, um eine Chrom-Nickel-Legierung, die beispielsweise 25 Gew. % Chrom aufweist und dabei einen Nickelanteil von 7 Gew. % hat. Eine derartige Legierung ist eine Edelstahllegierung mit einer sehr hohen Festigkeit. Die erste Materialkomponente 8, die den radial inneren Bereich 12 des Magnetblechs 2 bildet, trägt insbesondere als Tragstruktur für die Festigkeit des Magnetbleches 2, insbesondere bei hohen Rotationsgeschwindigkeiten, Verantwortung. Im Gegensatz dazu ist die zweite Materialkomponente 10 als magnetische Materialkomponente, insbesondere als weichmagnetische Komponente, ausgestaltet. Sie weist einen sehr hohen Eisenanteil auf, der bevorzugt über 95 Gew. %, ganz besonders bevorzugt über 99 Gew. % liegt. Ein so hoher Eisenanteil, im Idealfall Reineisen, führt zu einer ferritischen Materialstruktur, die besonders gute weichmagnetische Eigenschaften aufweist. Diese Reineisenstruktur lässt sich sehr leicht ummagnetisieren, wobei die Hystereseverluste bei der Ummagnetisierung des Materials sehr gering sind.

Die Herstellung eines derartigen Magnetblechs 2 lässt sich besonders gut durch ein Schablonendruckverfahren oder durch ein Siebdruckverfahren darstellen. Dabei ist das Siebdruckverfahren eine Unterart des Schablonendruckverfahrens, wobei eine Schablone auf ein Substrat gelegt wird und mittels eines Rakels eine Druckpaste durch die offenen Bereiche der Schablone auf das Substrat gedruckt werden. Beim Siebdruckverfahren sind die offenen Bereiche der Schablone durch ein feines Sieb ausgestaltet, wodurch vorteilhaftere rheologische Effekte erzielt werden.

Bei dem Siebdruck werden die beschriebenen Bereiche, nämlich der radial innere Bereich 12 und der radial äußere Bereich 14, nacheinander mit unterschiedlichen Druckpasten gedruckt. Dabei weist die erste Druckpaste, die den inneren Bereich 12 bzw. die erste Materialkomponente 8 umfasst, Materialpartikel auf, die nach einem Sinterprozess zur ersten Materialkomponente 8 werden. Das heißt, dass diese erste Druckpaste neben organischen Bindemitteln auch Metallpartikel als funktionale Bestandteile aufweist, die die Materialzusammensetzung und die Legierungselemente der ersten Materialkomponente beinhalten. Im Gegenzug dazu weist die zweite Druckpaste, die die spätere zweite Materialkomponente 10 abbildet, neben den organischen Bindemitteln Metallpartikel aus Legierungselementen der zweiten Materialkomponente 10 auf.

Zur Herstellung des Magnetblechs 2 wird demnach zunächst beispielsweise die ersten Druckpaste für den inneren Bereich 12 gedruckt. Das Substrat mit der Druckpaste wird bevorzugt kurz getrocknet, und es erfolgt in einem zweiten Druckschritt unter Verwendung einer anderen Schablone, die den äußeren Bereich 14 des Magnetblechs 2 ausspart, der Druck des äußeren Bereichs 14. So wird die Vorstufe des äußeren Bereiches 14 gedruckt. Diesem folgt ein weiterer Trocknungsschritt hin zu einem Grünkörper und gegebenenfalls in einem Prozessschritt integriert, ein Entbinderungsschritt. Dabei werden aus der gedruckten Druckpaste organische Bindemittel und Druckhilfsmittel thermisch zersetzt. Nach dem Entbindern weist ein so entstandener Braunkörper im Wesentlichen nur noch die funktional wirkenden Materialpartikel der jeweiligen Materialkomponente auf. Im Weiteren folgt ein Sinterschritt, bei dem der Braunkörper zu dem Magnetblech 2 gesintert wird. Beim Sintern handelt es sich um einen Wärmebehandlungsprozess, bei dem aneinander anliegende Partikel durch Diffusionsprozesse eine monolithische Verbindung eingehen. Dabei können lokal Schmelzphasen auftreten, diese sind jedoch nicht dominant.

Die Temperatur bei einem Sinterprozess von metallischen Materialien wie dem vorliegenden Magnetblech beträgt in der Regel zwischen 900 °C und 1400 °C.

Das so hergestellte Magnetblech 2 wird gegebenenfalls nachbearbeitet und zu dem Blechpaket, wie es beispielsweise in Figur 2 dargestellt ist, gestapelt. Die Magnetbleche 2 im Blechpaket 4 gemäß Figur 2 weisen dabei keine unterschiedlichen Materialbereiche auf, wie dies in Figur 3 beschrieben ist. Die Figur 2 dient daher lediglich der Veranschaulichung eines Blechpakets 4 an sich. Das Magnetblech 2 gemäß Figur 3 weist neben den Vorteilen, die die unterschiedlichen Materialkomponenten aufweisen noch den Vorteil auf, dass es mit einer Dicke von ungefähr 80 µm bis 200 µm dünner ausgestaltet werden kann als herkömmliche, aus größeren Blechen ausgestanzte Magnetbleche. Dünnere Magnetbleche sind wiederum vorteilhafter für die magnetischen Eigenschaften und somit für die Leistungsdichte der elektrischen Maschine.

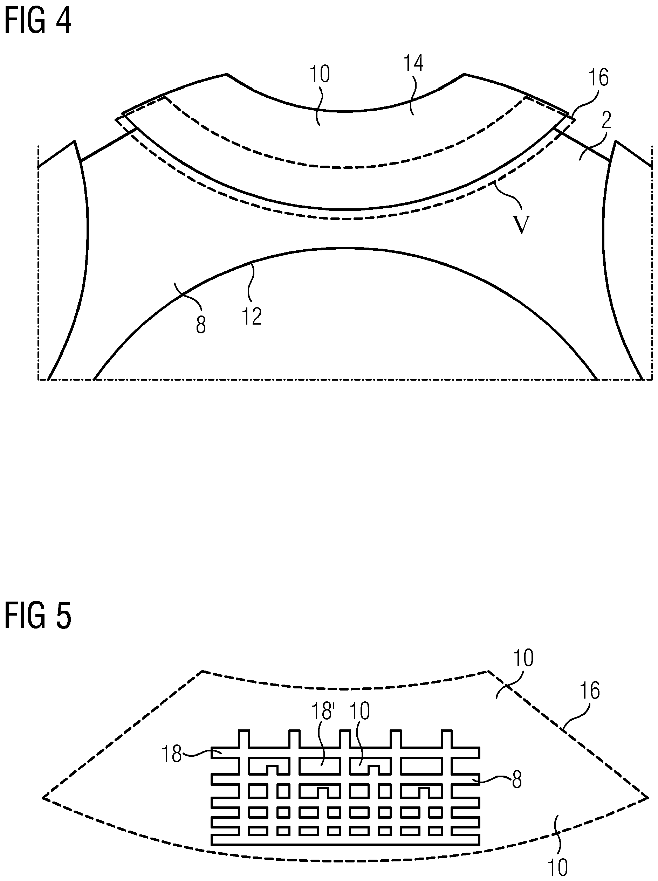

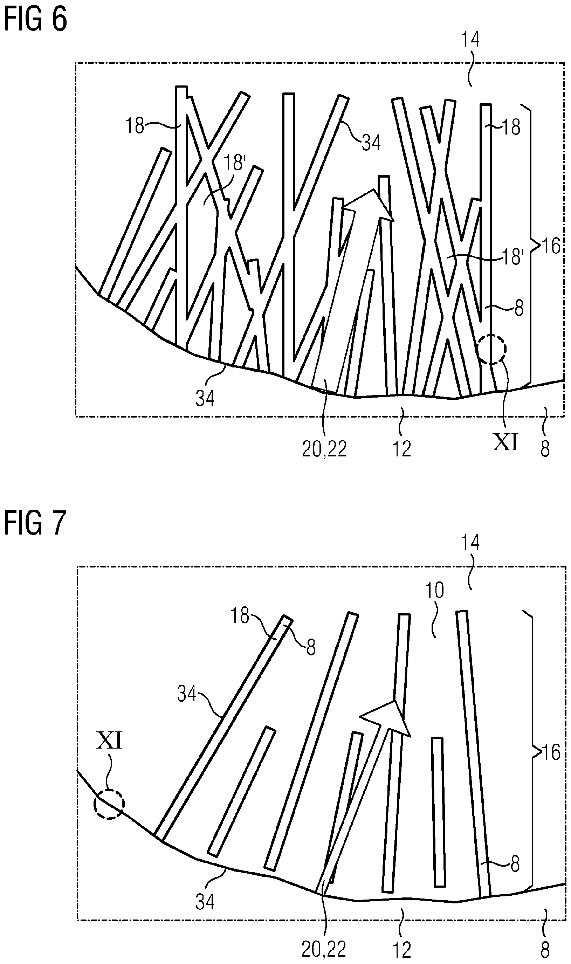

In Figur 4 ist eine vergrößerte Darstellung des Magnetbleches 2 in seinem äußeren Bereich gegeben. Hierbei ist ein Übergangsbereich 16 gestrichelt eingezeichnet. Der Übergangsbereich 16 stellt den Übergang zwischen der ersten Materialkomponente 8 und der zweiten Materialkomponente 10 dar. Dieser ist wiederum in Figur 5 ein weiteres Mal vergrößert, wobei in Figur 5 beispielhaft eine Darstellung von diskreten Teilbereichen 18 bzw. 18' eingezeichnet ist, auf deren Wirkung bezüglich der Figuren 6-10 näher eingegangen wird.

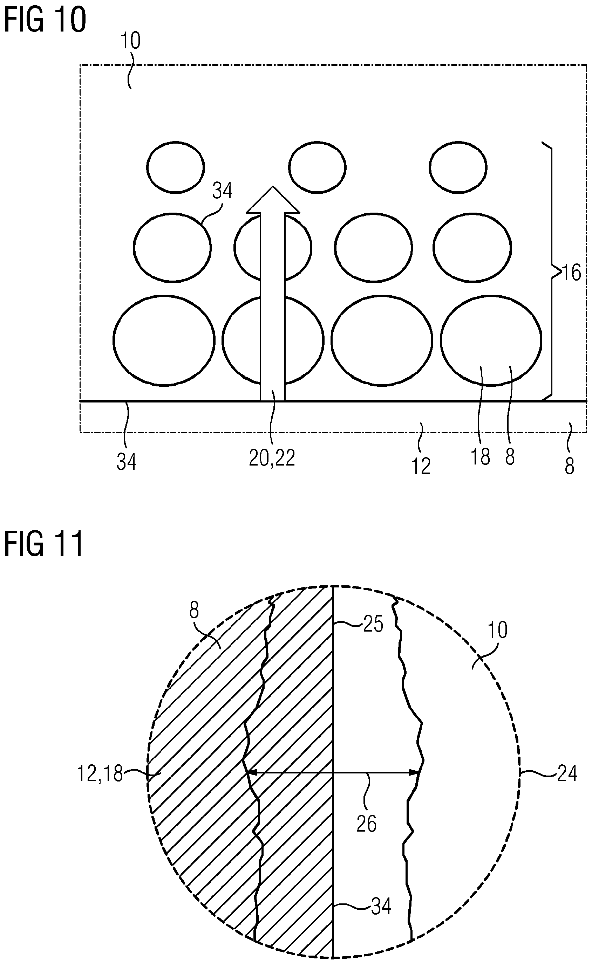

Der Übergangsbereich 16 ist der Bereich, in dem sowohl die erste Materialkomponente 8 als auch die zweite Materialkomponente 10 auftreten. Und zwar ist es dabei nicht so, dass diese beiden Materialkomponenten 8, 10 vermischt vorliegen, sondern dass diskrete Teilbereiche 18 vorgesehen sind, die wiederum eine weitgehend diskrete Materialgrenze 25 zu der jeweilig anderen Materialkomponente bilden (vgl. Figur 11).

In den Figuren 6-10 sind Pfeile mit dem Bezugszeichen 20 eingezeichnet, die in eine radiale Richtung weisen, also einem beliebigen Radius des Magnetblechs 2 folgen und dabei eine Linie 22 bilden. Folgt man vom inneren Bereich 12 dem Pfeil 20 in den äußeren Bereich 14, so schneidet die Linie 22 mindestens 2 diskrete Bereiche 18. Dies bedeutet, dass entlang des Übergangsbereiches 16 mehrfach ein Wechsel zwischen der ersten Materialkomponente und der zweiten Materialkomponente in Form der diskreten Bereiche 18, 18' erfolgt. Auf diese Weise wird eine Spannung, die aufgrund unterschiedlicher thermischer Ausdehnungskoeffizienten hervorgerufen wird, reduziert. Eine gesamte Grenzlinie 34 zwischen der ersten Materialkomponente 8 und der zweiten Materialkomponente 10 wird auf diese Weise insgesamt erhöht und sie führt in eine Vielzahl unterschiedlicher Richtungen, wodurch auftretende Spannungen sich gegenseitig aufheben können.

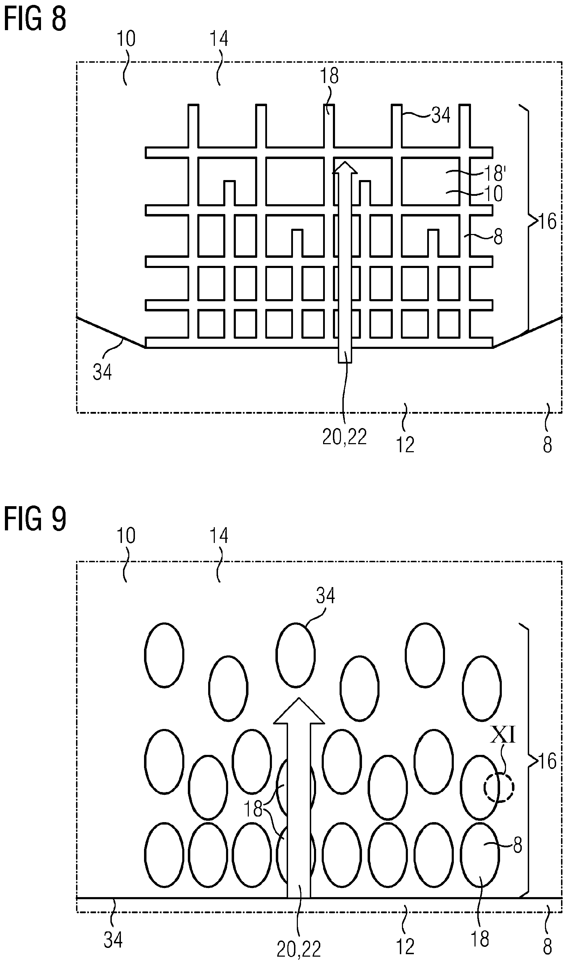

Dabei kann es auch zweckmäßig sein, dass sich diskrete Bereiche 18 einer Materialkomponente 8, 10 gegenseitig mit diskreten Bereichen 18' der jeweilig anderen Materialkomponente 8, 10 umgeben, wie dies beispielsweise in den Figuren 6 und 8 dargestellt ist. Dies ist in diesen Figuren in Form von zaunartigen Strukturen der diskreten Bereiche 18, 18' abgebildet. Dabei sind beispielsweise in Figur 8 die diskreten Bereiche 18 der ersten Materialkomponente 8 stabförmig länglich ausgebildet und die diskreten Bereiche 18', die durch die zweite Materialkomponente 10 gebildet werden, sind in Form von rechteckigen Flächen mit niedrigem Aspektverhältnis ausgebildet. Auch in Figur 6 sind diskrete Bereiche 18 mit Einschlüssen von diskreten Bereichen 18' dargestellt, wobei es sich hier um weniger rechtwinklige Ausgestaltungen handelt, als dies in Figur 8 der Fall ist.

Die diskreten Bereiche 18 und 18', die im letzten Absatz beschrieben sind, können bezüglich der ersten Materialkomponente 8 und der zweiten Materialkomponente 10 auch komplementär ausgestaltet sein. Dabei können die diskreten Bereiche 18 mit der jeweiligen Materialkomponente 8, 10, wie sie im inneren Bereich 12 oder äußeren Bereich 14 vorliegen, direkt in Verbindung stehen, wie dies beispielsweise in den Figuren 6 und 8 dargestellt ist, oder sie können von diesem jeweils beabstandet vorliegen, wie dies beispielhaft in den Figuren 9, 10 und 7 dargestellt ist. In Figur 7 ist dabei eine hybride Form abgebildet, manche diskrete Bereiche 18 liegen direkt an dem jeweilig korrespondierenden Bereich an und wachsen aus diesem heraus, andere sind vollständig davon getrennt.

Es ist dabei zweckmäßig, die Form, Flächenausdehnung und Grö-βe der diskreten Bereiche 18, 18' mittels einer finite Elemente-Methode zu berechnen, sodass eine minimale Spannung bei den resultierenden thermischen Ausdehnungskoeffizienten auftritt. Der Übergangsbereich 16 ist dabei je nach Durchmesser des Magnetblechs 2 zwischen 1 mm und 30 mm, bevorzugt zwischen 3 mm und 10 mm, breit. Es hat sich herausgestellt, dass in einem derart breiten Übergangsbereich, der über eine mikroskopische Feinstrukturierung hinausgeht, der Unterschied der Ausdehnungskoeffizienten am wirksamsten kompensiert werden kann. Ferner ist es dabei zweckmäßig, wenn im Übergangsbereich 16 der Flächenanteil der ersten Materialkomponente <50 % ist und dabei bevorzugt zwischen 5 % und 40 % beträgt. Auch dies ist insbesondere in Hinblick auf die magnetischen Eigenschaften des äußeren Bereiches 14 von Vorteil, dass insgesamt der Flächenanteil der nicht weichmagnetischen ersten Materialkomponente nicht zu groß wird. Dieser sollte in Hinblick auf gute weichmagnetische Eigenschaften, allerdings auch in Hinblick auf eine Minimierung der thermischen Spannungen, innerhalb der beschriebenen Bereiche liegen.

Bei Einführung des Begriffes der diskreten Materialgrenze 25 ist dieser der Begriff "weitgehend" vorangestellt. Dies bedeutet, dass die Materialgrenze 25 im makroskopischen Sinne bezogen auf die Breite des Übergangsbereiches 16 durchaus diskret ist, in einer mikroskopischen Betrachtung weist sie jedoch eine Diffusionszone 26 auf, wie dies in Figur 12 vergrößert dargestellt ist. Bei der Figur 11 handelt es sich um eine vergrößerte Darstellung des Ausschnittes XI, in den Figuren 6, 7 und 9 lediglich um schematische Darstellungen dieses Ausschnittes XI. Dieser ist exemplarisch für den gesamten Grenzbereich 24 zwischen der ersten Materialkomponente 8 und der zweiten Materialkomponente 10 entlang der Grenzlinie 34. In Figur 11 ist der besagte Grenzbereich 24 dargestellt, wobei auf der rechten Seite die zweite Materialkomponente 10 verläuft und auf der linken Seite die erste Materialkomponente 8 angeordnet ist. Zwischen beiden Materialkomponenten 8, 10 befindet sich die Diffusionszone 26, die üblicherweise eine Ausdehnung aufweist, die > 50 µm ist. In einem herkömmlichen Grenzbereich zwischen zwei Materialien kommt es bei einem Sinterprozess zwar grundsätzlich zur Diffusion von Ionen aus einem Materialbereich in den anderen und umgekehrt, in herkömmlicher Weise wird jedoch versucht, diesen Effekt durch prozesstechnische Maßnahmen so gering wie möglich zu halten. Die Diffusionszone 26 gemäß Figur 11 ist jedoch entgegen der sonst üblichen Diffusionszonen deutlich breiter ausgebildet, was durch eine jeweilig höhere Temperatur oder eine Dauer des Sinterprozesses erzielt werden kann. Um dies zu bewirken kann beispielsweise eine Temperaturerhöhung um 50 K - 100 K und/oder eine Verlängerung der Haltezeit bei maximaler Sintertemperatur um 30 min bis zu 2 h gegenüber einer eigentlich zur Dichtsinterung notwendigen Temperatur bzw. Zeit zweckmäßig sein. Eine derart verbreiterte Diffusionszone zwischen den Materialkomponenten trägt ebenfalls zur Reduktion von Spannungen bei, die durch die unterschiedlichen thermischen Ausdehnungskoeffizienten induziert werden.

### Bezugszeichenliste

- 2: Magnetblech
- 4: Blechpaket
- 6: elektrische Maschine
- 8: erste Materialkomponente
- 10: zweite Materialkomponente
- 12: radial innerer Bereich
- 14: radial äußerer Bereich
- 16: Übergangsbereich
- 18: diskreter Teilbereich
- 20: radiale Richtung
- 22: Linie
- 24: Grenzbereich
- 25: Materialgrenze
- 26: Diffusionszone
- 28: radiale Erstreckung
- 30: Rotor
- 32: Welle
- 34: Grenzlinie

## Patentansprüche

1. Additiv hergestelltes Magnetblech (2), für ein Blechpaket (4) einer elektrischen Maschine (6), wobei mindestens zwei in planarer Erstreckung voneinander getrennte Materialkomponenten (8, 10) vorliegen, wobei
- eine erste Materialkomponente (8) in einem radial inneren Bereich (12) des Magnetblechs (2) angeordnet ist und eine zweite Materialkomponente (10) in einem radial äußeren Bereich (14) angeordnet ist und
- ein Übergangsbereich (16) zwischen dem radial inneren Bereich (12) und dem radial äußeren Bereich (14) vorgesehen ist, in dem sowohl die erste Materialkomponente (8) und die zweite Materialkomponente (10) in diskreten Teilbereichen (18) vorliegen, **dadurch gekennzeichnet, dass**
- die diskreten Teilbereiche (18) in radialer Richtung (20) in der Art in Reihe angeordnet sind, dass eine einem Radius folgende Linie (22) mindestens zwei diskrete Teilbereiche (18) schneidet.

2. Magnetblech nach Anspruch 1, **dadurch gekennzeichnet, dass** in einem Grenzbereich (24) zwischen der ersten Materialkomponente (8) und der zweiten Materialkomponente (10) im Übergangsbereich (16) eine Diffusionszone (26) vorliegt, die sich mindestens 50 µm in die jeweilig andere Materialkomponente (8, 10) hinein erstreckt.

3. Magnetblech nach Anspruch 1 oder 2, **dadurch gekennzeichnet, dass** im Übergangsbereich (16) ein Flächenanteil der ersten Materialkomponente (8) zwischen 5 % und 40 % beträgt.

4. Magnetblech nach einem der vorhergehenden Ansprüche, **dadurch gekennzeichnet, dass** der Übergangsbereich (16) eine radiale Erstreckung (28) aufweist, die zwischen 1 mm und 30 mm liegt.

5. Magnetblech nach einem der vorhergehenden Ansprüche, **dadurch gekennzeichnet, dass** die diskreten Bereiche eine maximale Erstreckung aufweisen, die zwischen 0,5 mm und 10 mm liegt.

6. Magnetblech nach Anspruch 5, **dadurch gekennzeichnet, dass** der Übergangsbereich (16) eine radiale Erstreckung (28) aufweist, die zwischen 3 mm und 10 mm liegt.

7. Magnetblech nach einem der vorhergehenden Ansprüche, **dadurch gekennzeichnet, dass** mehrere diskrete Teilbereiche (18) mindestens einer Materialkomponente (8, 10) sich derart kreuzen, dass dadurch mindestens ein diskreter Teilbereich (18') der jeweils anderen Materialkomponente (8, 10) eingeschlossen wird.

8. Magnetblech nach einem der Ansprüche 1 bis 7, bei dem die erste Materialkomponente (8) eine Eisenlegierung umfasst, die zu mindestens 25 Vol. % ein austenitisches Gefüge aufweist.

9. Magnetblech nach einem der Ansprüche 1 bis 8, **dadurch gekennzeichnet, dass** die zweite Materialkomponente (10) eine Eisenlegierung umfasst, die mindestens 95 Gew. %, insbesondere mindestens 97 Gew. % Eisen, umfasst.

10. Magnetblech nach Anspruch 9, **dadurch gekennzeichnet, dass** die zweite Materialkomponente (10) eine ferritische oder martensitische Gefügestruktur aufweist.

11. Magnetblech nach einem der Ansprüche 1 bis 10, **dadurch gekennzeichnet, dass** die erste Materialkomponente (8) eine Chrom-Nickel-Legierung ist.

12. Magnetblech nach Anspruch 11, **dadurch gekennzeichnet, dass** die erste Materialkomponente (8) eine Eisen-Chrom-Legierung ist, mit einem Chromanteil, der zwischen 22 Gew. % und 28 Gew. %, insbesondere zwischen 24 Gew. % und 26 Gew. % beträgt.

13. Magnetblech nach Anspruch 9 oder 12, **dadurch gekennzeichnet, dass** die erste Materialkomponente (8) einen Nickelanteil aufweist, der zwischen 4 Gew. % und 10 Gew. %, insbesondere zwischen 6 Gew. % und 8 Gew. % beträgt.

14. Blechpaket für einen Rotor (30) einer elektrischen Maschine (6) umfassend eine Mehrzahl von Magnetblechen (2) nach einem der Ansprüche 1 bis 13.

15. Elektrische Maschine umfassend ein Blechpaket (4) nach Anspruch 14.

## Claims

1. Additively manufactured magnetic lamination (2), for a laminated core (4) of an electric machine (6), at least two material components (8, 10) separated from one another in planar extent are present,
- a first material component (8) being arranged in a radially inner region (12) of the magnetic lamination (2) and a second material component (10) being arranged in a radially outer region (14) and
- a transition region (16) between the radially inner region (12) and the radially outer region (14) is provided, in which transition region both the first material component (8) and the second material component (10) are present in discrete sub-regions (18), **characterized in that**
- the discrete sub-regions (18) are arranged in series in the radial direction (20) such that a line (22) following a radius intersects at least two discrete sub-regions (18).

2. Magnetic lamination according to Claim 1, **characterized in that** in an interface (24) between the first material component (8) and the second material component (10) in the transition region (16) there is a diffusion zone (26), which extends at least 50 um into the respective other material component (8, 10) .

3. Magnetic lamination according to Claim 1 or 2, **characterized in that** an area percentage of the first material component (8) in the transition region (16) is between 5% and 40%.

4. Magnetic lamination according to one of the preceding claims, **characterized in that** the transition region (16) has a radial extent (28) which is between 1 mm and 30 mm.

5. Magnetic lamination according to one of the preceding claims, **characterized in that** the discrete regions have a maximum extent which is between 0.5 mm and 10 mm.

6. Magnetic lamination according to Claim 5, **characterized in that** the transition region (16) has a radial extent (28) which is between 3 mm and 10 mm.

7. Magnetic lamination according to one of the preceding claims, **characterized in that** multiple discrete sub-regions (18) of at least one material component (8, 10) cross such that, as a result, at least one discrete sub-region (18') of the respective other material component (8, 10) is enclosed.

8. Magnetic lamination according to one of Claims 1 to 7, wherein the first material component (8) comprises an iron alloy which has an austenitic microstructure up to at least 25% by volume.

9. Magnetic lamination according to one of Claims 1 to 8, **characterized in that** the second material component (10) comprises an iron alloy which comprises at least 95% by weight, in particular at least 97% by weight iron.

10. Magnetic lamination according to Claim 9, **characterized in that** the second material component (10) has a ferritic or martensitic microstructure.

11. Magnetic lamination according to one of Claims 1 to 10, **characterized in that** the first material component (8) is a chromium-nickel alloy.

12. Magnetic lamination according to Claim 11, **characterized in that** the first material component (8) is an iron-chromium alloy having a chromium proportion of between 22% by weight and 28% by weight, in particular between 24% by weight and 26% by weight.

13. Magnetic lamination according to Claim 9 or 12, **characterized in that** the first material component (8) has a nickel proportion of between 4% by weight and 10% by weight, in particular between 6% by weight and 8% by weight.

14. Laminated core for a rotor (30) of an electric machine (6), comprising a plurality of magnetic cores (2) according to one of Claims 1 to 13.

15. Electric machine comprising a laminated core (4) according to Claim 14.

## Revendications

1. Tôle (2) magnétique fabriquée de manière additive, pour un paquet (4) de tôles d'une machine (6) électrique, dans laquelle il y a au moins deux constituants (8, 10) de matériau séparés les uns des autres dans une étendue plane, dans laquelle
- un premier composant (8) de matériau est disposé dans une zone (12) intérieure radialement de la tôle (2) magnétique et un deuxième composant (10) de matériau est disposé dans une zone (14) extérieure radialement et
- il est prévu, entre la zone (12) intérieure radialement et la zone (14) extérieure radialement, une zone (16) de transition, dans laquelle il y a à la fois le premier composant (8) de matériau et le deuxième composant (10) de matériau en des zones (18) partielles discrètes, **caractérisée en ce que**
- les zones (18) partielles discrètes sont disposées dans la direction (20) radiale en série, de manière à ce qu'une ligne (22) suivant un rayon coupe au moins deux zones (18) partielles discrètes.

2. Tôle magnétique suivant la revendication 1, **caractérisée en ce qu'**il y a, dans une zone (24) limite, entre le premier composant (8) de matériau et le deuxième composant (10) de matériau dans la zone (16) de transition, une zone (26) de diffusion, qui s'étend au moins sur 50 µm dans l'autre composant (8, 10) de matériau respectif.

3. Tôle magnétique suivant la revendication 1 ou 2, **caractérisée en ce que**, dans la zone (16) de transition, une proportion en surface du premier composant (8) de matériau est comprise entre 5 % et 40 %.

4. Tôle magnétique suivant l'une des revendications précédentes, **caractérisée en ce que** la zone (16) de transition a une étendue (28) radiale, qui est comprise entre 1 mm et 30 mm.

5. Tôle magnétique suivant l'une des revendications précédentes, **caractérisée en ce que** les zones discrètes ont une étendue maximum, qui est comprise entre 0,5 mm et 10 mm.

6. Tôle magnétique suivant la revendication 5, **caractérisée en ce que** la zone (16) de transition a une étendue (28) radiale, qui est comprise entre 3 mm et 10 mm.

7. Tôle magnétique suivant l'une des revendications précédentes, **caractérisée en ce que** plusieurs zones (18) partielles discrètes d'au moins un composant (8, 10) de matériau s'étendent de manière à ce qu'ainsi au moins une zone (18') partielle de respectivement l'autre composant (8, 10) de matériau soit incluse.

8. Tôle magnétique suivant l'une des revendications 1 à 7, dans laquelle le premier composant (8) de matériau comprend un alliage de fer, qui, pour au moins 25 % en volume, a une texture austénitique.

9. Tôle magnétique suivant l'une des revendications 1 à 8, **caractérisée en ce que** le deuxième composant (10) de matériau comprend un alliage de fer, qui comprend au moins 95 % en poids, en particulier au moins 97 % en poids de fer.

10. Tôle magnétique suivant la revendication 9, **caractérisée en ce que** le deuxième composant (10) de matériau a une texture ferritique ou martensitique.

11. Tôle magnétique suivant l'une des revendications 1 à 10, **caractérisée en ce que** le premier composant (8) de matériau est un alliage de chrome et de nickel.

12. Tôle magnétique suivant la revendication 11, **caractérisée en ce que** le premier composant (8) de matériau est un alliage de fer et de chrome ayant une proportion de chrome, qui est comprise entre 22 % en poids et 28 % en poids, en particulier entre 24 % en poids et 26 % en poids.

13. Tôle magnétique suivant la revendication 9 ou 12, **caractérisée en ce que** le premier composant (8) de matériau a une proportion de nickel, qui est comprise entre 4 % en poids et 10 % en poids, en particulier entre 6 % en poids et 8 % en poids.

14. Paquet de tôles d'un rotor (30) d'une machine (6) électrique comprenant une pluralité de tôles (2) magnétiques suivant l'une des revendications 1 à 13.

15. Machine électrique comprenant un paquet (4) de tôles suivant la revendication 14.
